Europäisches Patentamt

European Patent Office

Office européen des brevets

(11) Publication number: **0 214 614**
**A2**

# (12) EUROPEAN PATENT APPLICATION

(21) Application number: 86112198.6

(51) Int. Cl.⁴: **G01N 15/14**

(22) Date of filing: 03.09.86

(30) Priority: 06.09.85 US 773155

(43) Date of publication of application:
**18.03.87 Bulletin 87/12**

(84) Designated Contracting States:
**BE CH DE FR GB IT LI NL SE**

(71) Applicant: **TECHNICON INSTRUMENTS CORPORATION**
**511 Benedict Avenue**
**Tarrytown, New York 10591(US)**

(72) Inventor: **Ahmad, Syed I.**
**1 Wisteria Court**
**Orangeburg New York(US)**
Inventor: **Benezra, Jeffrey**
**140-18 Debs Place**
**Bronx New York(US)**
Inventor: **Malin, Michael J.**
**14 Terrace Circle**
**Park Ridge New Jersey(US)**
Inventor: **Prasad, Shambu**
**3 Livingston Avenue**
**White Plains New York(US)**

(74) Representative: **Schmidt-Evers, Jürgen,**
**Dipl.-Ing. et al**
**Patentanwälte Dipl.-Ing. H. Mitscherlich**
**Dipl.-Ing. K. Gunschmann Dipl.-Ing.**
**Dr.rer.nat. W. Körber Dipl.-Ing. J.**
**Schmidt-Evers Dipl.-Ing. W. Melzer Postfach**
**26 01 32**
**D-8000 München 26(DE)**

(54) Non-lytic sheath composition.

(57) This invention relates to a novel non-lytic sheath composition for use in inhibiting the retention of bubbles in high-speed automated biomedical analytical systems, The sheath composition comprises an aqueous solution of, in admixture, a buffer, an osmolality filler and a nonionic surfactant wherein said surfactant is a polymer of polyols having terminal hydroxyl groups.

# NON-LYTIC SHEATH COMPOSITION

Recently, with the advent of high-speed automated biomedical analytical systems, it has become necessary to develop certain apparatus and method for precisely controlled and coordinated concomitant supply of sample and sheath liquids at optimal flow rates by differential pumping from respective pluralities of different sources thereof to the same sheath stream flow cell for successive different types of sample analyses. Through such methods, sample analysis accuracy and reproducibility are maximized, thereby reducing apparatus complexity and costs. By use of methods utilizing a sheath composition, the risk of sample carryover is greatly reduced. Carryover is defined as the contamination of a succeeding sample by the residue of a preceding sample resulting in a loss of accuracy.

Several methods and apparatus have been known to produce a supply of sheath stream and sample fluids to sheath stream flow cells. For instance, U.S. Patent No. 3,740,143 discloses the use of a multichannel peristaltic pump to supply respective series of diluted blood samples to a plurality of sheath stream flow cells for a different type of sample analysis with respect to each. U.S. Patent No. 3,661,460 discloses the use of a combination of gravity feed, peristaltic pumping and vacuum pumping for the supply of sheath stream and sample fluids to a sheath stream flow cell. Recently, a method and apparatus for producing precisely controlled and coordinated sheath stream and sample fluids from respective pluralities of different sources thereof to a common sheath stream flow cell for sample fluid analyses was disclosed in Canadian Patent No. 1,196,836, granted November 19, 1985, which teaches the use of variable speed sample and sheath liquid pumps connectable to selected sources of sample and sheath liquid by flow directing and control means, operable to differentially pump, by concomitantly pumping and aspirating, the selected sample and sheath liquids through a single channel.

One major drawback to the methods described above is the fact that such apparatus tend to cause air bubbles to form in the sample and sheath liquids and become retained in the various apparatus components due to the difference in surface energy of various solid surfaces. Such retained bubbles cause the sample stream to "wander" out of alignment causing distorted optical registration by the detector and may also be falsely detected as part of the sample (i.e., red blood cells). It is desired, therefore, to develop a sheath composition which will prevent bubbles from being retained and yet will not lyse the cells, especially red blood cells, present in the samples.

This invention relates to a non-lytic sheath composition which inhibits bubble retention. More particularly, it relates to a sheath composition comprising an aqueous solution of a buffer, an osmolality filler and a non-ionic surfactant wherein said surfactant is a copolymer of polyols terminating in primary hydroxyl groups.

The present invention relates to a non-lytic sheath composition which inhibits bubble retention. Such sheath composition also has the necessary refractive index and is stable. The sheath composition of this invention is comprised of a buffer or mixture of buffers, an osmolality filler and a non-ionic surfactant which is a copolymer of polyols having terminal primary hydroxyl groups.

Buffers useful in the production of the sheath composition of this invention are those which will maintain the pH of the sheath composition at from about 7.0 to about 7.5. Suitable buffers include phosphate, imidazole, diethylmalonate and the sodium salt of 3-(N-morpholino) propane sulfonic acid, or mixtures thereof. More preferred is a mixture of $NaH_2PO_4$ and $Na_2HPO_4$. Such mixture preferably contains from about 38 mole percent to about 66 mole percent $Na_2HPO_4$. Preferably, the mixture contains from about 47 mole percent to about 58 mole percent $Na_2HPO_4$. The buffer or mixture of buffers is present in said sheath composition in an amount suitable to maintain the pH at the indicated level. Generally, the buffer or mixture of buffers is present in an amount of from about 10 millimoles/liter (mM) to about 30 mM. More preferably, the buffer or mixture of buffers is present in an amount of from about 15 mM to about 25 mM, most preferably from about 17 mM to about 23 mM.

The osmolality filler which is suitable for use in the composition of this invention may be any compound or compounds which will supply osmolal equivalents so that the osmolality of the inventive composition is from about 285 to about 305 millosmols/kilograms (mOsm/kg), such as non-lytic non-electrolytes, for instance glucose or sorbitol. Ideally, the osmolality filler is a salt, preferably an alkali metal salt of chlorine or bromine. Most preferably, the osmolality filler is NaCl. Generally, the amount of osmolality filler present in the sheath composition of this invention is from about 108 mM to about 139 mM, an amount of from about 114 mM to about 134 mM having been found preferable. Ideally, the osmolality filler is present at about 119 mM to about 129 mM. When NaCl is used, the ideal range corresponds to about 6.96 grams/liter - (g/L) to about 7.55 g/L.

The non-ionic surfactant which may be used in the sheath composition of this invention is a copolymer of polyols having terminal hydroxyl groups, particularly a block copolymer of propylene oxide and ethylene oxide. The preferred surfactant is one having the formula $HO-CH_2-CH_2-O-[(CH_2CH_2-O)_n-(CH_2CH_2CH_2-O)_m]-CH_2CH_2CH_2-OH$ where n and m may each be independently from about 39 to about 77. Most preferably, m is about 56 and n is 72. Such surfactants have been found to significantly inhibit bubble retention by wetting the components of high-speed automated biomedical analytical systems without causing lysis of cells, especially red blood cells, and while maintaining the sheath composition's refractive index at from about 1.334 to about 1.335. The refractive index of the sheath composition is extremely important because the analyses being performed are measured by optical means through flow cells. Suitable surfactants may be prepared by methods known to those skilled in the art and, for instance, are commercially available as the Pluronic class of non-ionic surfactants from BASF Wyandotte Company of Parsippany, New Jersey, particularly Pluronic P-105, Pluronic P-84, Pluronic P-85, Pluronic P-75 and Pluronic P-87. Most preferred is Pluronic P-105. The surfactant, when Pluronic P-105 is used, is present in the sheath composition in an amount of from about 0.7 g/L to about 1.3 g/L. More preferably, it is present at about 0.8 g/L to about 1.2 g/L. Most preferably, the surfactant is present in the sheath composition in an amount of from about 0.9 g/L to about 1.1 g/L. When other suitable surfactants are used, they are present in equimolar amounts.

The sheath composition of this invention may also contain an antioxidant to prevent undesired autoidation of the surfactant. Suitable antioxidants include preventive antioxidants such as 3,3'-thiodipropionic acid, 4,4'-thiodibutyric acid, or the sodium or potassium salts thereof, and chain-terminating anti-oxidants such as p-methoxy phenol or paramethoxyphenol, or mixtures of both types of antioxidants. Generally, the antioxidant may be present at an amount of from about 50 mg/L to about 150 mg/L, ideally from about 75 mg/L to about 125 mg/L.

The sheath composition of this invention may also contain an antimicrobial agent. Suitable antimicrobial agents include a mixture of 5-chloro-2-methyl-4-isothiozolin-3-one and 2-methyl-4-isothiazolin-3-one, available as Kathon CG from Rohm and Haas Company of Philadelphia, Pennsylvania. When present, the anti-microbial agent is preferably in an amount of from about 0.03% volume/volume (v/v) to about 0.05% (v/v) and, more preferably, from about .03% (v/v) to about .04% - (v/v).

When the buffer or mixture of buffers used in the composition of this invention are not metal chelators, for instance imidazole, the skilled artisan may wish to include a metal ion deactivator in order to prevent the metal ion catalysed autoxidation of the surfactant. Suitable metal iondeactivators include o-benzene disulfonic acid (or its disodium or dipotassium salts) and ethylene diaminetetraacetic acid. When present, the metal ion deactivator may be used in an amount of from about 0.25 g/L to about 0.40 g/L, although the skilled artisan may use more or less according to his needs.

As indicated, the sheath composition of this invention is an aqueous solution. Therefore, the balance of the solution is water preferably deionized water.

In preparing the sheath composition of this invention, the buffer or mixture of buffers, salt and, optionally, antioxidant and antimicrobial agent are the components dissolved in a portion of deionized water. The non-ionic surfactant is then added and the solution is stirred until the components are dissolved. The remaining deionized water is then added. The resulting solution may then be filtered through a suitable 22 micron ( ) filter.

The following examples are illustrative of the composition of this invention, whereas they are presented to further facilitate an understanding of the inventive concepts, they are in no way to be interpreted as limiting the present invention.

EXAMPLE I

A non-lytic sheath composition of this invention was prepared as follows:

800 mL of deionized water was added to 1L beaker. To this was added 2.4 g of $Na_2HPO_4$, 0.3 g of $NaH_2PO_4$, 7.7g of NaCl, 0.1g of 3,3-thiodipropionic acid and 0.4 ml of Kathon CG. This mixture was stirred until all ingredients were dissolved. After dissolution was complete, 1.0 g of Pluronic P-85 was added and the solution stirred until dissolved. The resulting solution was then transferred to a 1000 mL volumetric flask and deionized water added to bring the solution to volume. The solution was then filtered through a 22 u Millipore brand filter into a suitable container.

## EXAMPLE II

A number of sheath compositions were prepared according to Example I except that the surfactant type and concentration were varied. These sheath compositions were tested by combining 900 L of sheath composition with 100 L of Technicon Instruments Corporation Set Point Calibrator (which is prepared by separating the cells from the plasma and platelets in pooled whole blood, formaldehyde-fixing the WBCs, and adding RBCs in plasma replacement fluid (PRF). PRF is a phosphate buffered (pH = 7.4) solution containing nutrients, albumin, salts and preservatives) for 10 minutes. The mixture was then centrifuged at 2000 rpm for 10 minutes and the supernatant visually examined for evidence of lysis. The results are shown in Table I.

<u>TABLE I</u>

| Surfactant | Concentration (%) | Class | Lyse Test[*] |
|---|---|---|---|
| Sodium Octyl Sulfate | 0.05 | anionic | N |
| "        "      " | 0.10 | | – |
| "        "      " | 0.20 | | W |
| "        "      " | 0.25 | | – |
| Sodium Decyl Sulfate | 0.01 | anionic | N |
| "        "      " | 0.03 | | N |
| "        "      " | 0.04 | | W |
| "        "      " | 0.05 | | M |
| Sodium Dodecyl Sulfate | 0.01 | anionic | N |
| "        "      " | 0.015 | | M |
| "        "      " | 0.02 | | M |
| "        "      " | 0.03 | | S |
| Dodecyl amine | 0.003 | cationic | M |
| "        " | 0.006 | | M |
| "        " | 0.009 | | M |
| DDAO[**] | 0.015 | zwitterionic | N |
| "        " | 0.03 | | M |
| SDBS[**] | 0.01 | anionic | N |
| " | 0.02 | | N |
| " | 0.03 | | S |
| CTAB[****] | 0.01 | cationic | M |
| " | 0.02 | | S |
| " | 0.03 | | S |
| PDE[*****] | 0.01 | non-ionic | N |
| "        " | 0.02 | | N |
| "        " | 0.03 | | N |
| "        " | 0.06 | | W |
| "        " | 0.15 | | W |
| "        " | 0.20 | | W |

| POE/POP G . ****** | 0.01 | non-ionic | N |
|---|---|---|---|
| " | 0.02 | | N |
| " | 0.03 | | N |
| " | 0.06 | | N |
| " | 0.15 | | N |
| " | 0.50 | | N |
| " | 1.00 | | N |
| " | 2.00 | | N |
| " | 2.50 | | N |
| " | 3.00 | | W |

* N = no lysis observed

W = weak lysis; some lysis observed

M = medium lysis; moderate amount of lysis observed

S = strong lysis; extensive lysis observed

** Dimethyl Dodecyl Amine Oxide

*** Sodium Dodecyl Benzene Sulfonate

**** Cetyl Trimethyl Ammonium Bromide

***** Polyethoxylated n-Dodecanol Ether

****** Polyoxyethylene/Polyoxypropylene Glycol (Pluronic P-85)

## EXAMPLE III

A sheath composition was prepared according to the following formulation:

| | |
|---|---|
| $Na_2HPO_4$ | 4.8 g |
| $NaH_2PO_4$ | 0.6 g |
| NaCl | 15.4 g |
| 3,3'-thiodipropionic acid | 0.2 g |
| Kathon CG | 0.8 g |
| distilled Water to volume (2000 ml) | |

The composition was then divided into seven 250 ml portions and surfactant added to six of these at a final concentration of 0.1% (0.25 g/250 ml). One of the seven portions of the compositions was tested without surfactant to serve as a control.

Experiment I (Ability to Wet/Fill): Each portion was tested for its ability to effectively wet the concentric flow module, flow cell and tubing - (silicone and teflon) from a Technical Instrument Corporation Diagnostic Hematology Analyzer by running the Analyzer for several effluent cycles without any sheath to "dry out" the equipment. A few effluent cycles were then run with the sheath composition portions prepared as described, the effect was observed to determine how effectively the concentric flow module, flow cell and tubing fill. up, and whether there was any bubble deposition. The results were rated as poor, fair, good, very good and excellent and are shown in Table II.

Experiment II (Ability to Remove) Air Bubbles: The same procedure as Experiment I was used except that slugs of air were introduced as the sheath composition portions were run through the system, thereby forming many small bubbles. The ability of the sheath composition portions to properly wet all assorted parts and to force small bubbles completely through the concentric flow module, flow cell and tubing was observed. The results were rated as poor, fair, good, very good and excellent and are shown in Table II.

EXPERIMENT III (LYSIS TEST): 10% (v/v) dilutions of Technicon Instruments Corporation Set Point Calibrator in sheath composition portions (0.5 ml calibrator and 4.5 ml of sheath composition) were allowed to stand at room temperature - (approximately 24°C) for ten minutes, then centrifuged at 2000 rpm for 5 minutes. The supernatant was examined for evidence of lysis (pink-red color) and each portion was rated as negative or positive. The results are shown in Table II.

TABLE II

| Portion # | Surfactant | Ability to wet/fill | Ability to remove | Lysis Test |
|---|---|---|---|---|
| 1 | - | Poor | Poor | Negative |
| 2 | Pluronic P-75[a] | Very good | Fair-good | Negative |
| 3 | Pluronic P-84[b] | Excellent | Very good | Negative |
| 4 | Pluronic P-85[c] | Excellent | Very good-excellent | Negative |
| 5 | Pluronic P-105[d] | Excellent | Excellent | Negative |
| 6 | Pluronic F-87[e] | Good | Fair-good | Negative |
| 7 | Tetronic 908[f] | Fair | Poor-fair | Negative |

[a] Surfactant according to formula having average molecular weight of about 4150.

[b] Surfactant according to formula having average molecular weight of about 4200.

[c] Surfactant according to formula having average molecular weight of about 4600.

[d] Surfactant according to formula having average molecular weight of about 6500.

[e] Surfactant according to formula having average molecular weight of about 7700.

[f] Surfactant having formula: (ethylene diamine)$_1$ (propylene oxide)$_{88}$ (ethylene oxide)$_{488}$, having an average molecule weight of 25,000.

It can be readily observed from the preceding examples that use of the non-ionic surfactants in the sheath composition of this invention are successful in the inhibition of bubble deposition without causing cell lysis whereas other tested surfactants lyse cell as the concentrations necessary for inhibition of bubble retention.

Claims

1. A non-lytic sheath composition comprising an aqueous solution of, in admixture,
    a) a buffer,
    b) an osmolality filler; and
    c) a non-ionic surfactant, wherein said surfactant is a copolymer of polyols terminating in primary hydroxyl groups.

2. The sheath composition of claim 1 wherein the surfactant has the formula

$$HO-CH_2CH_2-O-[(CH_2CH_2-O)_n-(CH_2CH_2CH_2-O)_m]-CH_2CH_2CH-OH$$

wherein n and m are, same or different, from about 39 to about 77.

3. The sheath composition of claim 2 wherein n is about 72 and m is about 56.

4. The sheath composition of claim 1 wherein the surfactant is a block copolymer of propylene oxide and ethylene oxide.

5. The sheath composition of any claims 1 to 4 wherein the buffer is a mixture of $NaH_2PO_4$ and $Na_2HPO_4$.

6. The sheath composition of any of claims 1 to 5 wherein the osmolality filler is an alkali metal salt.

7. The sheath composition of claim 6 wherein the salt is NaCl.

8. The sheath composition of any of claims 1 to 7 wherein the buffer is present in an amount of from about 10 mM to about 30 mM, the osmolality filler is present in an amount of from about 108 mM to about 139 mM, and/or the surfactant is present in an amount of from about 0.7 g/L to 1.3 g/L.

9. The sheath composition of claim 8 wherein the buffer is present in an amount of from about 15 mM to about 25 mM, the osmolality filler is present in an amount of from about 114 mM to about 134 mM, and/or the surfactant is present in an amount of from about 0.9 g/L to about 1.1 g/L.

10. The sheath composition of any of claims 1 to 9 which contains an antioxidant and/or an antimicrobial agent.

11. The sheath composition of claim 10 wherein the antioxidant contains a preventative antioxidant, a chain-terminating antioxidant or mixtures of each.

12. The sheath composition of claim 11 wherein the preventative antioxidant is 3,3,'-thiodipropionic acid and the chain-terminating antioxidant is paramethoxyphenol.

13. The sheath composition of claim 11 wherein the anti-microbial agent is a mixture of 5-chloro-2-methyl-4-isothiazolin-3-one and 2-methyl-4-isothiazolin-3-one.

14. The sheath composition of any of claims 10 to 13 wherein the antimicrobial agent is present in an amount of from about 0.3 g/L to about 0.4 g/L and/or the antioxidant is present in an amount of from about 75 mg/L to about 300 mg/L.

15. The sheath composition of any of claims 1 to 14 wherein the pH of the composition is from about 7.0 to about 7.5, and the refractive index of the composition is from about 1.334 to about 1.335.

16. The sheath composition of any of claims 1 to 15 wherein the osmolality of the composition is from about 285 to about 305 mOsm/kg.